# EUROPEAN PATENT APPLICATION

(11) **EP 2 372 432 A1**
(43) Date of publication of application: **05.10.2011**
(21) Application number: 10197112.5
(22) Date of filing: 28.12.2010
(51) Int. Cl.: G02B 27/22, H04N 13/00, G02B 27/24, G02B 27/26

(54) **Three-dimensional image display apparatus and method of adjusting displayed image**

(30) Priority: 24.02.2010 JP 2010038595
(71) Applicant: Fujifilm Corporation, Minato-ku Tokyo 106-8620 (JP)
(72) Inventor: Yoshikawa, Kenji, Kanagawa 258-8538 (JP)
(74) Representative: Klunker . Schmitt-Nilson . Hirsch

(57) **Abstract**

A three-dimensional image display apparatus (22) includes an image combiner (38) which combines a grid-like right-eye image (260r) and a grid-like left-eye image (2601), which are substantially identical to each other, into a grid-like combined image (262, 264), and a position adjusting mechanism (107) which adjusts a position of the image combiner (38) with respect to an observer (20) to adjust a blur in the grid-like combined image (262, 264) due to a positional deviation between the grid-like right-eye image (260r) and the grid-like left-eye image (2601).

## Description

### Field of the Invention:

The present invention relates to a three-dimensional image display apparatus for enabling an observer to view a three-dimensional image based on a combined image which is produced by combining a two-dimensional image (right-eye image) to be seen by the right eye of the observer and a two-dimensional image (left-eye image) to be seen by the left eye of the observer, and a method of adjusting the combined image that is displayed.

### Description of the Related Art:

Heretofore, there has been known in the art a three-dimensional image display apparatus for enabling an observer to view, as a three-dimensional image, a combined image using a stereoscope by displaying a two-dimensional image (right-eye image) for the right eye of the observer on a right-eye image display device, displaying a two-dimensional image (left-eye image) for the left eye of the observer on a left-eye image display device, and combining the right-eye image and the left-eye image into the combined image with an image combiner.

If the observer who views the three-dimensional image changes its posture, then the observer finds it difficult to see the three-dimensional image. Therefore, it is desirable to appropriately adjust the position of the image combiner with respect to the observer each time the posture of the observer changes.

Conventional techniques for adjusting displayed three-dimensional images are disclosed in Japanese Laid-Open Patent Publication No. 2009-122895, Japanese Laid-Open Patent Publication No. 2007-279445, and Japanese Patent No. 3324694.

However, the display adjusting techniques disclosed in the above publications do not adjust the position of the image combiner with respect to the observer when the posture of the observer with respect to the three-dimensional image changes. Therefore, the conventional display adjusting techniques fail to solve the above problem even if they are applied to three-dimensional image display apparatus.

### SUMMARY OF THE INVENTION

It is an object of the present invention to appropriately adjust the position of an image combiner with respect to an observer each time the posture of the observer who views a three-dimensional image changes.

To achieve the above object, according to the present invention, there is provided a three-dimensional image display apparatus comprising a right-eye image display unit for displaying a right-eye image, which is two-dimensional, to be seen by a right eye of an observer, a left-eye image display unit for displaying a left-eye image, which is two-dimensional, to be seen by a left eye of the observer, an image combiner for combining the grid-like right-eye image and the grid-like left-eye image, which are substantially identical to each other, into a grid-like combined image, and a position adjusting mechanism for adjusting a position of the image combiner with respect to the observer to adjust a blur in the grid-like combined image due to a positional deviation between the grid-like right-eye image and the grid-like left-eye image.

According to the present invention, there is also provided a method of adjusting an image that is displayed, comprising the steps of displaying on a right-eye image display unit a right-eye image, which is two-dimensional, to be seen by a right eye of an observer, displaying on a left-eye image display unit a left-eye image, which is two-dimensional, to be seen by a left eye of the observer, combining the grid-like right-eye image and the grid-like left-eye image, which are substantially identical to each other, into a grid-like combined image with an image combiner, and adjusting a position of the image combiner with respect to the observer to adjust a blur in the grid-like combined image due to a positional deviation between the grid-like right-eye image and the grid-like left-eye image.

With the present invention, the observer can use the position adjusting mechanism to adjust the position of the image combiner with respect to the observer for adjusting a blur in the grid-like combined image due to a positional deviation between the right-eye image and the left-eye image. Each time the posture of the observer who views a three-dimensional image is changed, the observer may use the position adjusting mechanism to adjust the position of the image combiner until the blur in the grid-like combined image is minimized. Accordingly, the position of the image combiner can be adjusted appropriately.

Since the right-eye image and the left-eye image are essentially identical grid-like images, if there is no positional deviation between the right-eye image and the left-eye image, then the grid-like combined image which is generated by combining the right-eye image and the left-eye image is a sharp image free of blurs. By directly viewing the sharp combined image, therefore, the observer can easily judge that it is not necessary to adjust the position of the half-silvered mirror using the position adjusting mechanism.

Conversely, if there is a positional deviation between the right-eye image and the left-eye image, then the grid-like combined image which is generated by combining the right-eye image and the left-eye image is a blurred image. By directly viewing the blurred combined image, therefore, the observer can easily judge that the combined image is blurred due to the positional deviation between the right-eye image and the left-eye image. The observer can also identify the location of the blur in the combined image, and decide that it is necessary to adjust the position of the half-silvered mirror using the position adjusting mechanism.

According to the present invention, therefore, even when the observer changes its posture, the observer can adjust the image combiner to its appropriate position and hence can view a sharp three-dimensional image.

One image display unit of the right-eye image display unit and the left-eye image display unit may be disposed in confronting relation to the observer, and the other image display unit of the right-eye image display unit and the left-eye image display unit may be disposed above the one image display unit and may be angularly spaced therefrom. The image combiner may comprise a half-silvered mirror disposed between the one image display unit and the other image display unit. The half-silvered mirror may transmit the image which is displayed by the one image display unit therethrough toward the observer and may reflect the image which is displayed by the other image display unit therefrom toward the observer, thereby outputting the images as the combined image to the observer.

The three-dimensional image display apparatus may further comprise a support member extending from the one image display unit and supporting the other image display unit. The position adjusting mechanism may comprise a shaft extending substantially horizontally through the support member, an angularly movable member angularly movably supported on opposite ends of the shaft for angular movement about the shaft between the one image display unit and the other image display unit, and a frame connected to the angularly movable member and supporting peripheral edges of the half-silvered mirror which is substantially rectangular in shape. The frame may have a groove defined therein which receives the peripheral edges of the half-silvered mirror therein. The groove may have a width along thickness of the half-silvered mirror, the width being greater than the thickness of the half-silvered mirror. The frame may include position adjusting members for positionally adjusting the peripheral edges of the half-silvered mirror within the groove along the thickness of the half-silvered mirror.

Since the width of the groove is greater than the thickness of the half-silvered mirror, the width provides a position adjusting range in which the half-silvered mirror is positionally adjustable. The position adjusting members make it possible to finely adjust the position of the half-silvered mirror in the position adjusting range along the thickness of the half-silvered mirror.

The position adjusting members may be disposed on the frame at respective four corners of the half-silvered mirror. The position of the half-silvered mirror can thus be adjusted wholly or locally along the thickness of the half-silvered mirror.

The frame may have threaded holes defined therein which are open to the groove in a direction along the thickness of the half-silvered mirror. The position adjusting members may comprise screws, respectively, threaded in the threaded holes, respectively, and having respective tip ends held in contact with the peripheral edges of the half-silvered mirror. Therefore, the position of the half-silvered mirror can easily be adjusted minutely along the thickness of the half-silvered mirror.

If the grid-like combined image is blurred in a portion thereof, then those of the position adjusting members which are close to a portion of the half-silvered mirror that corresponds to the blurred portion of the grid-like combined image may be used to positionally adjust the half-silvered mirror. Inasmuch as the position of the half-silvered mirror can be adjusted locally, the position of the half-silvered mirror can be adjusted precisely and accurately.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a schematic view of a radiographic image capturing system incorporating a three-dimensional image display apparatus according to an embodiment of the present invention;
FIG. 2 is a perspective view of the three-dimensional image display apparatus shown in FIG. 1;
FIG. 3 is a side elevational view of the three-dimensional image display apparatus shown in FIG. 2;
FIG. 4 is a cross-sectional view taken along line IV - IV of FIG. 3;
FIG. 5 is a cross-sectional view taken along line V - V of FIG. 3;
FIG. 6 is a cross-sectional view taken along line VI - VI of FIG. 3;
FIG. 7 is a cross-sectional view taken along line VII - VII of FIG. 3;
FIG. 8 is an exploded perspective view of a positional adjusting mechanism and a half-silvered mirror shown in FIGS. 2 and 3;
FIGS. 9A and 9B are cross-sectional views showing the manner in which the half-silvered mirror is positionally adjusted;
FIG. 10 is a detailed block diagram of the radiographic image capturing system shown in FIG. 1;
FIG. 11A is a view showing a right-eye image;
FIG. 11B is a view showing a left-eye image;
FIGS. 11C and 11D are views showing a combined image;
FIG. 12 is a flowchart of an operation sequence of the radiographic image capturing system shown in FIGS. 1 and 10; and
FIG. 13 is a flowchart of a subroutine in step S6 shown in FIG. 12.

### DESCRIPTION OF THE PREFERRED EMBODIMENTS

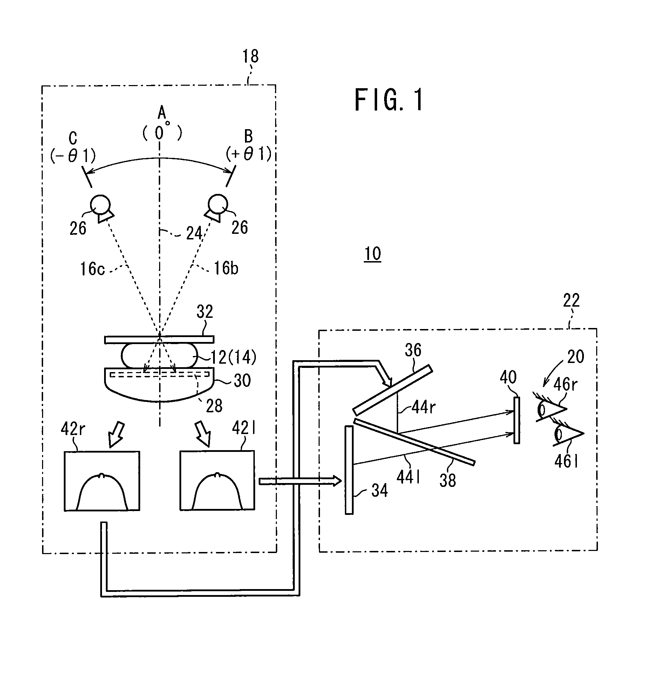

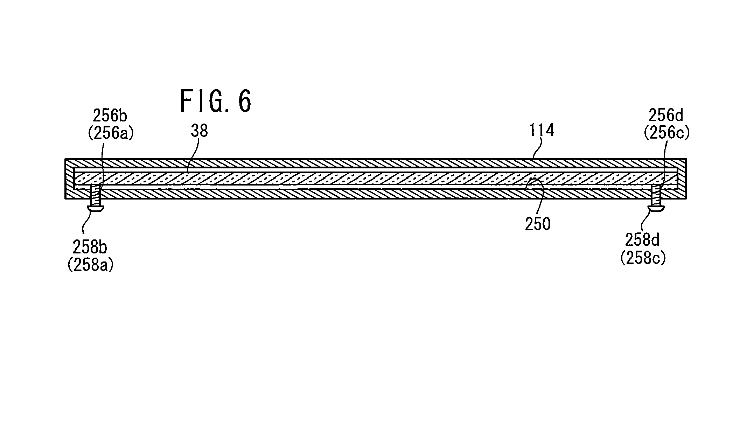

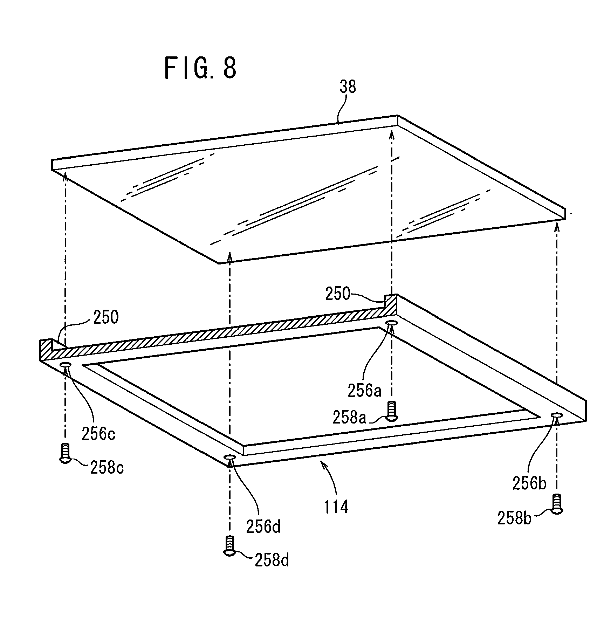

A three-dimensional image display apparatus according to an embodiment of the present invention and a method of adjusting a combined image that is displayed by the three-dimensional image display apparatus will be described below with reference to FIGS. 1 through 13.

First, a radiographic image capturing system 10 incorporating a three-dimensional image display apparatus 22 according to an embodiment of the present invention will be described below with reference to FIG. 1.

As shown in FIG. 1, the radiographic image capturing system 10 basically comprises a mammographic apparatus 18 for performing a stereographic image capturing process to apply radiation 16b, 16c at different angles to a breast 14 of a subject 12 for thereby acquiring two radiographic images each representing the breast 14, and the three-dimensional image display apparatus 22 for enabling an observer 20, such as a doctor, a radiological technician, or the like, to view a three-dimensional image based on the two radiographic images from the mammographic apparatus 18, one of the two radiographic images being used as a two-dimensional image (right-eye image) 42r for the right eye 46r of the observer 20 and the other as a two-dimensional image (left-eye image) 421 for the left eye 461 of the observer 20.

The mammographic apparatus 18 comprises a radiation source 26 for applying the radiation 16b, 16c to the breast 14 respectively from a position B that is angularly spaced an angle of +01 from a position A (θ = 0°) on a central axis 24 extending substantially centrally through the breast 14 and a position C that is angularly spaced an angle of -θ1 from the position A, a solid-state detector 28 for detecting the radiation 16b, 16c which has passed through the breast 14 and converting the detected radiation 16b, 16c into radiographic images as the right-eye image 42r and the left-eye image 421, an image capturing base 30 for holding the breast 14 thereon, the image capturing base 30 housing the solid-state detector 28 therein, and a compression plate 32 displaceable toward the image capturing base 30 away from the radiation source 26 for compressing the breast 14 against the image capturing base 30.

In FIG. 1, the radiation 16b is applied from the radiation source 26 disposed in the position B to the breast 14, and the radiation 16b that has passed through the breast 14 is detected and converted into the right-eye image 42r by the solid-state detector 28. The radiation 16c is applied from the radiation source 26 disposed in the position C to the breast 14, and the radiation 16c that has passed through the breast 14 is detected and converted into the left-eye image 421 by the solid-state detector 28. The central axis 24 extends substantially centrally through the breast 14 substantially perpendicularly to the upper surface of the image capturing base 30 and the solid-state detector 28.

The three-dimensional image display apparatus 22 comprises a left-eye image display unit 34 for displaying the left-eye image 421, a right-eye image display unit 36 for displaying the right-eye image 42r, the right-eye image display unit 36 being angularly spaced a predetermined angle from the left-eye image display unit 34, a (substantially rectangular) half-silvered mirror (image combiner) 38 disposed in a predetermined position between the left-eye image display unit 34 and the right-eye image display unit 36, for transmitting display light 441 from the left-eye image 421 displayed by the left-eye image display unit 34, therethrough to the observer 20, and reflecting display light 44r from the right-eye image 42r displayed by the right-eye image display unit 36, therefrom to the observer 20, and a stereoscope 40 to be worn by the observer 20.

The observer 20 sees, through the stereoscope 40, the right-eye image 42r represented by the display light 44r from the half-silvered mirror 38 with the right eye 46r, and the left-eye image 421 represented by the display light 441 from the half-silvered mirror 38 with the left eye 461, thereby visually recognizing (a combined image of) the right-eye image 42r and the left-eye image 421 as a three-dimensional image (3D image).

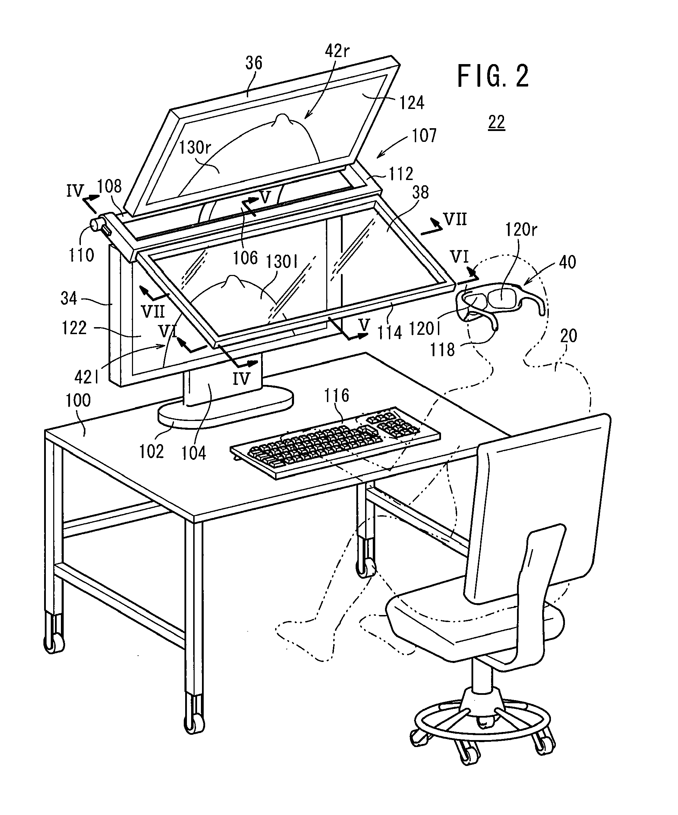

Specific structural details of the three-dimensional image display apparatus 22 will be described below with reference to FIGS. 2 through 9B.

As shown in FIG. 2, the three-dimensional image display apparatus 22 includes a base 102 mounted on the upper surface of a table 100, a support column 104 extending upwardly from the base 102, the left-eye image display unit 34, e.g., a liquid-crystal display unit or the like, supported in an upright position on the support column 104, a curved support arm (support member) 106 extending upwardly from a rear surface of the left-eye image display unit 34, the right-eye image display unit 36, e.g., a liquid-crystal display unit or the like, supported on the support arm 106 obliquely to the left-eye image display unit 34, a half-silvered mirror support mechanism (position adjusting mechanism) 107 supported by the support arm 106 and extending in a space between the upper surface of the table 100 and the right-eye image display unit 36 in front of the left-eye image display unit 34, the half-silvered mirror 38 supported by the half-silvered mirror support mechanism 107 in a given position between the left-eye image display unit 34 and the right-eye image display unit 36, an operating unit 116 such as a keyboard or the like to be operated by the observer 20, and the stereoscope 40 to be worn by the observer 20.

The half-silvered mirror support mechanism 107 comprises a cylindrical shaft 108 extending horizontally through the support arm 106, a substantially U-shaped angularly movable member 112 angularly movably supported on the opposite ends of the shaft 108 for angular movement about the shaft 108 between the left-eye image display unit 34 and the right-eye image display unit 36, and a (substantially rectangular) frame 114 connected to the angularly movable member 112 and supporting the peripheral edges of the half-silvered mirror 38.

The angularly movable member 112, the frame 114, and the half-silvered mirror 38 are locked against angular movement about the shaft 108 when the observer 20 turns and displaces a handle 110 toward the shaft 108. The angularly movable member 112, the frame 114, and the half-silvered mirror 38 can thus be fixed at a desired angle with respect to the left-eye image display unit 34 and the right-eye image display unit 36.

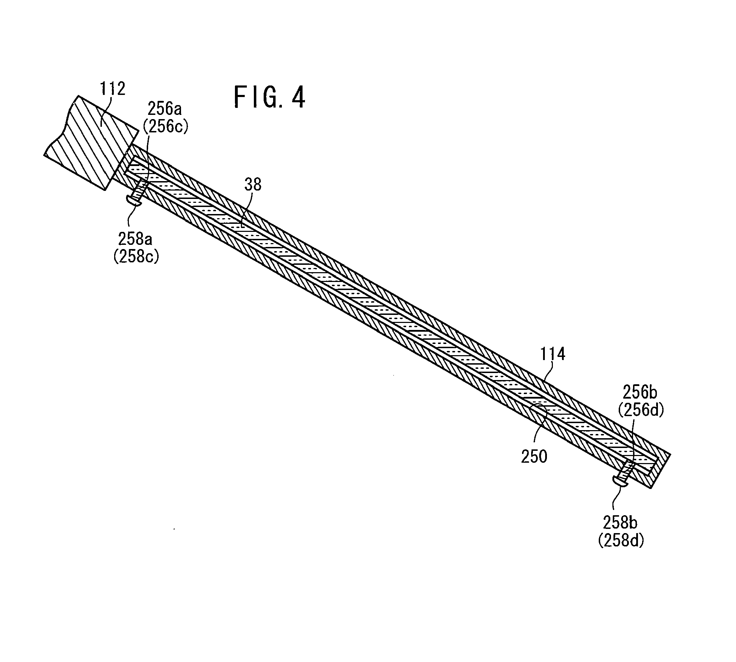

The frame 114 that supports the peripheral edges of the half-silvered mirror 38 will be described in detail below with reference to FIGS. 4 through 9B.

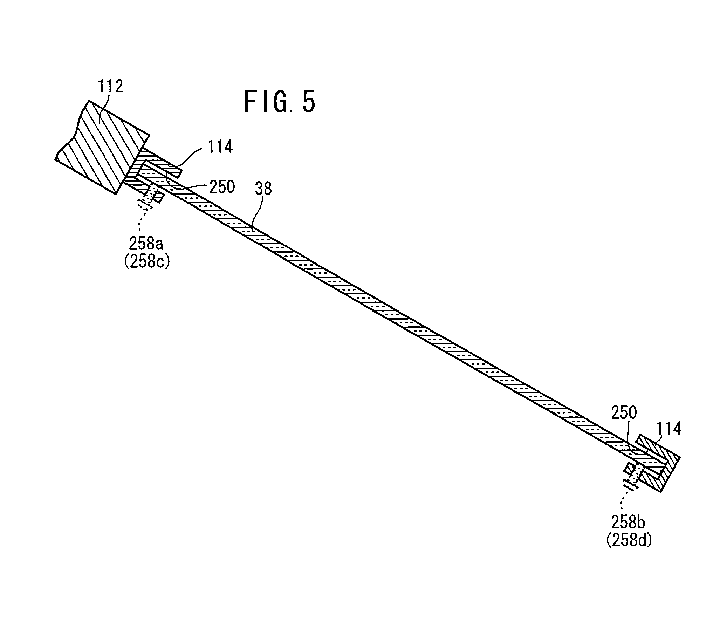

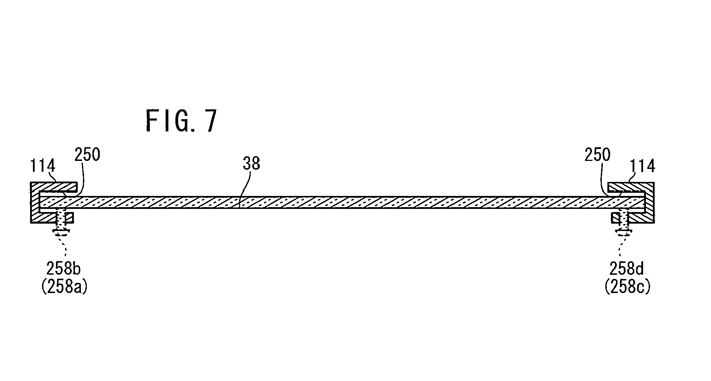

The frame 114 has a shape including a large opening which is open toward the observer 20 (see FIG. 2). The frame 114 includes a groove 250 defined therein which is open inwardly toward the opening of the frame 114. The groove 250 has a width in a direction along the thickness of the frame 114 and hence the half-silvered mirror 38. The width of the groove 250 is greater than the thickness of the half-silvered mirror 38. The groove 250 has a depth along the plane of the frame 114 and hence the half-silvered mirror 38. The depth of the groove 250 is large enough for the peripheral edges of the half-silvered mirror 38 to be received in the groove 250 (see FIGS. 5 and 7). When the peripheral edges of the half-silvered mirror 38 are placed in the groove 250, the peripheral edges of the half-silvered mirror 38 are supported by the frame 114.

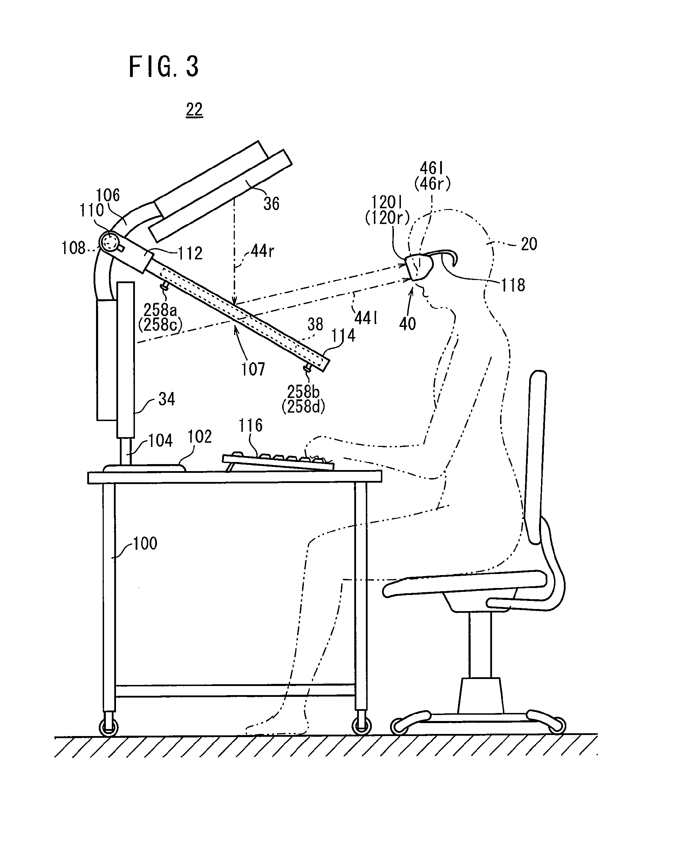

As shown in FIGS. 3, 4, 6, 8, 9A, and 9B, the frame 114 has threaded holes 256a through 256d defined in a lower wall thereof at respective positions aligned with the four corners of the half-silvered mirror 38. The threaded holes 256a through 256d extend through the lower wall of the frame 114 and are open to the groove 250 in the direction along the thickness of the frame 114. Screws (position adjusting members) 258a through 258d are threaded respectively in the threaded holes 256a through 256d.

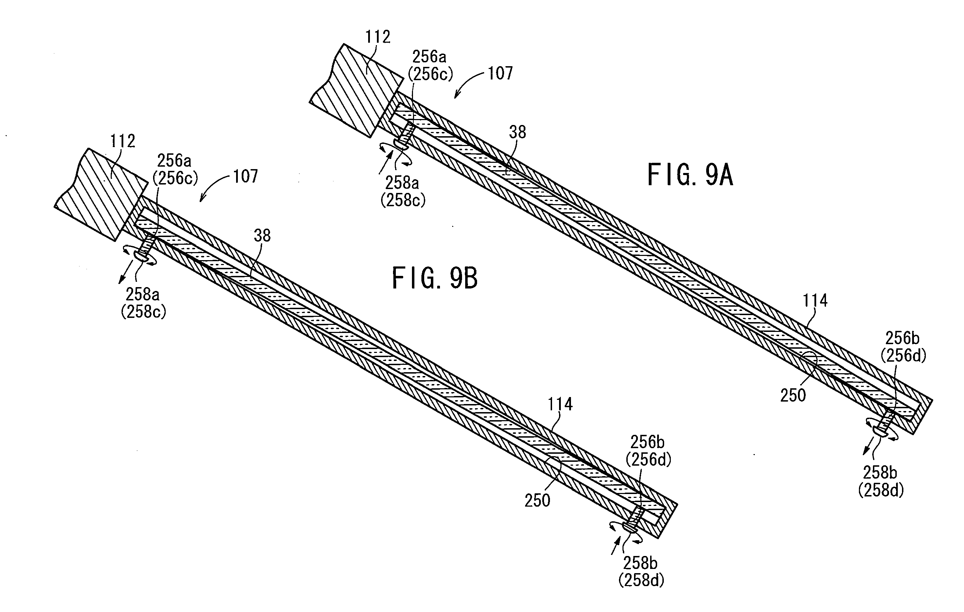

The screws 258a through 258d that are threaded respectively in the threaded holes 256a through 256d have respective tip ends which can be held in contact with a lower surface at the four corners of the half-silvered mirror 38. When the screws 258a through 258d are turned by a screwdriver, not shown, to finely adjust their axial positions, the heights or vertical positions in the groove 250 of the peripheral edges of the half-silvered mirror 38 can be adjusted (see FIGS. 9A and 9B). According to the present embodiment, the width of the groove 250 in the direction along the thickness of the frame 114 and hence the half-silvered mirror 38 represents a position adjusting range in which the heights or vertical positions of the peripheral edges of the half-silvered mirror 38 are adjustable.

FIG. 9A shows the manner in which the peripheral edge of the half-silvered mirror 38 near the screws 258a, 258c is raised, i.e., its height or vertical position is increased, within the groove 250 by tightening the screws 258a, 258c, and the peripheral edge of the half-silvered mirror 38 near the screws 258b, 258d is lowered, i.e., its height or vertical position is reduced, within the groove 250 by loosening the screws 258b, 258d. FIG. 9B shows the manner in which the peripheral edge of the half-silvered mirror 38 near the screws 258a, 258c is lowered, i.e., its height or vertical position is reduced, within the groove 250 by loosening the screws 258a, 258c, and the peripheral edge of the half-silvered mirror 38 near the screws 258b, 258d is raised, i.e., its height or vertical position is increased, within the groove 250 by tightening the screws 258b, 258d.

As shown in FIG. 2, the stereoscope 40 comprises a frame 118, a polarizer lens 120r fixed to the frame 118 for the right eye 46r, and a polarizer lens 1201 fixed to the frame 118 for the left eye 461. The left-eye image display unit 34 displays the left-eye image 421 including a breast image 1301 representing the breast 14 on a display screen 122 thereof. The right-eye image display unit 36 displays the right-eye image 42r including a breast image 130r representing the breast 14 on a display screen 124 thereof.

As described above, the half-silvered mirror 38 transmits the display light 441 from the left-eye image 421, which is a two-dimensional image, therethrough to the stereoscope 40 worn by the observer 20, and reflects the display light 44r from the right-eye image 42r, which is a two-dimensional image, therefrom to the stereoscope 40 worn by the observer 20 (see FIG. 3). The polarizer lens 120r of the stereoscope 40 transmits therethrough only the display light 44r which is parallel to the absorption axis of the polarizer lens 120r, and the polarizer lens 1201 of the stereoscope 40 transmits therethrough only the display light 441 which is parallel to the absorption axis of the polarizer lens 1201. The observer 20 who is wearing the stereoscope 40 sees the right-eye image 42r represented by the display light 44r with the right eye 46r, and sees the left-eye image 421 represented by the display light 441 with the left eye 461, thereby visually recognizing the three-dimensional image (3D image) of the breast 14.

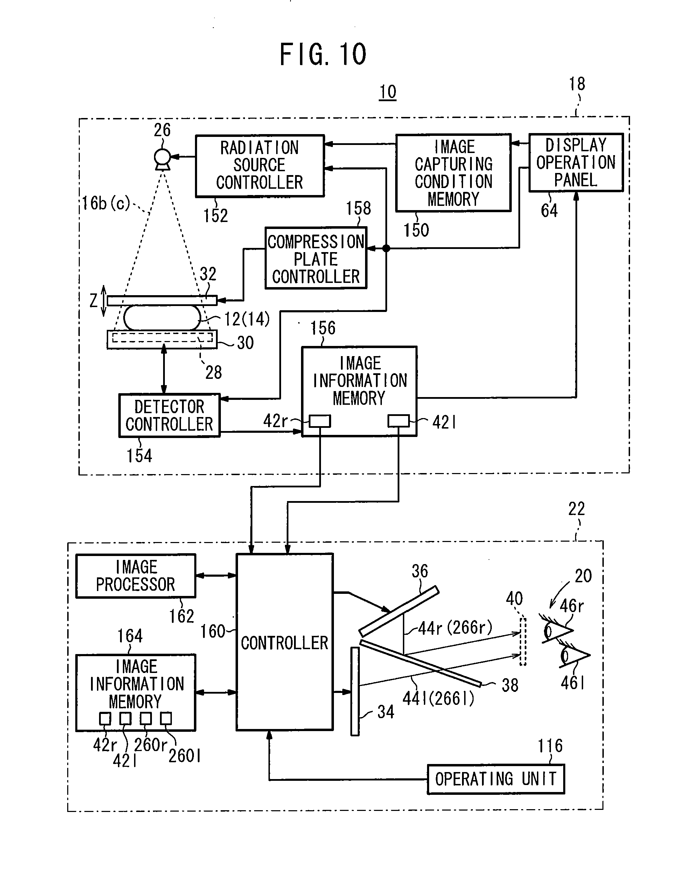

FIG. 10 is a detailed block diagram of the radiographic image capturing system 10.

Components of the radiographic image capturing system 10 which have not been described above with reference to FIGS. 1 through 9B will be described below with reference to FIG. 10.

As shown in FIG. 10, the mammographic apparatus 18 further includes a display operation panel (display operation unit) 64, an image capturing condition memory 150, a radiation source controller 152, a detector controller 154, an image information memory 156, and a compression plate controller 158.

The image capturing condition memory 150 stores image capturing conditions including a tube current and a tube voltage of the radiation source 26, irradiation doses and irradiation times of the radiation 16b, 16c, image capturing angles (+θ1, -θ1) in the stereographic image capturing process, an image capturing sequence, etc. The image capturing conditions can be set (stored) in the image capturing condition memory 150 by the doctor or the radiological technician, i.e., the observer 20 when it operates the display operation panel 64. The radiation source controller 152 controls the radiation source 26 according to the image capturing conditions. The compression plate controller 158 controls the compression plate 32 to move in the directions indicated by the arrow Z. The detector controller 154 controls the solid-state detector 28 to store the right-eye image 42r and the left-eye image 421 which have been converted from the radiation 16b, 16c by the solid-state detector 28, in the image information memory 156.

The three-dimensional image display apparatus 22 also includes a controller 160, an image processor 162, and an image information memory 164.

The controller 160 acquires the right-eye image 42r and the left-eye image 421 stored in the image information memory 156, and controls the image processor 162 to perform an image processing process on the right-eye image 42r and the left-eye image 421. The controller 160 displays the processed left-eye image 421 on the display screen 122 (see FIG. 2) of the left-eye image display unit 34 and also displays the processed right-eye image 42r on the display screen 124 of the right-eye image display unit 36. The controller 160 can also perform processing sequences according to instructions input from the observer 20 through the operating unit 116. The image information memory 164 stores the processed right-eye image 42r and the processed left-eye image 421.

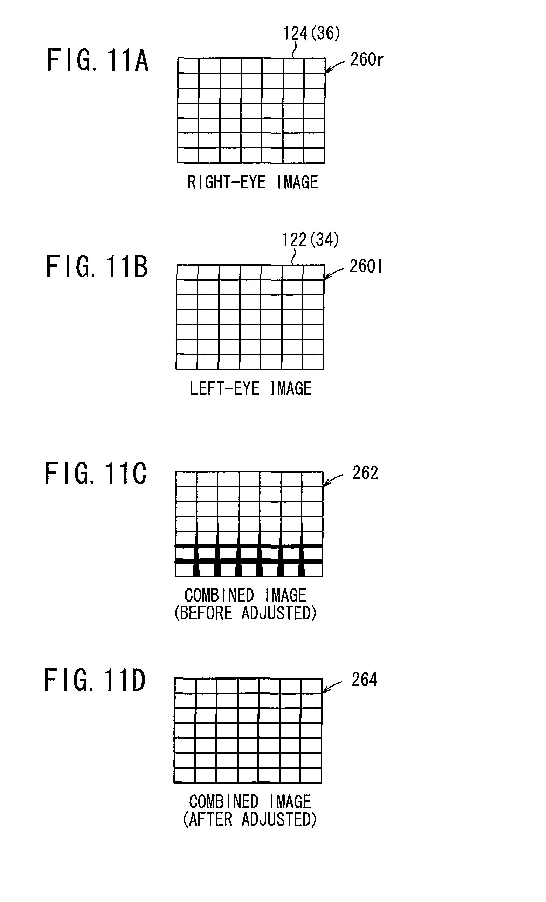

The image information memory 164 stores, in advance, a grid-like right-eye image 260r shown in FIG. 11A and a grid-like left-eye image 2601 shown in FIG. 11B. The grid-like right-eye image 260r and the grid-like left-eye image 2601 are images to be used to adjust the position of the half-silvered mirror 38 as described below.

When the posture of the observer 20 with respect to the three-dimensional image display apparatus 22 is vertically changed or when the observer 20 views a three-dimensional image through the stereoscope 40 for a first image interpretation and diagnosis of the day, the observer 20 may find the three-dimensional image blurred. If the observer 20 finds the three-dimensional image blurred, then in order to see the three-dimensional image as a sharper image, the observer 20 operates the operating unit 116 to instruct the controller 160 to display the grid-like right-eye image 260r and the grid-like left-eye image 2601.

In response to the instruction from the observer 20, the controller 160 displays the grid-like left-eye image 2601 stored in the image information memory 164 on the display screen 122 of the left-eye image display unit 34 and also displays the grid-like right-eye image 260r stored in the image information memory 164 on the display screen 124 of the right-eye image display unit 36.

Display light 2661 from the grid-like left-eye image 2601 displayed on the display screen 122 of the left-eye image display unit 34 travels obliquely upwardly toward the half-silvered mirror 38, and display light 266r from the grid-like right-eye image 260r displayed on the display screen 124 of the right-eye image display unit 36 travels obliquely downwardly toward the half-silvered mirror 38. The half-silvered mirror 38 transmits the display light 2661 therethrough and reflects the display light 266r therefrom, generating a grid-like combined image 262 (see FIG. 11C) which is a combination of the right-eye image 260r represented by the display light 266r and the left-eye image 2601 represented by the display light 2661.

Since the observer 20 has instructed the controller 160 to display the right-eye image 260r and the left-eye image 2601 because the displayed three-dimensional image is blurred, when the observer 20 views the combined image 262 through the stereoscope 40, the grid-like combined image 262 is viewed as including a blurred lower portion (see FIG. 11C). The lower portion of the grid-like combined image 262 is blurred because since the observer 20 has changed its posture vertically and the half-silvered mirror 38 is no longer in an appropriate position with respect to the observer 20, a positional deviation has occurred between the display light 266r of the right-eye image 260r and the display light 2661 of the left-eye image 2601 which travel from the half-silvered mirror 38 toward the stereoscope 40.

The observer 20 now uses the screwdriver, not shown, to adjust the axial positions of the screws 258a through 258d threaded in the respective threaded holes 256a through 256d in the frame 114 to finely adjust the heights or vertical positions in the groove 250 of the peripheral edges of the half-silvered mirror 38 until the displayed grid-like combined image 262 will not be blurred. For example, if the grid-like combined image 262 has its lower portion blurred as shown in FIG. 11C, then the observer 20 turns the screws 258b, 258d corresponding to the lower portion of the grid-like combined image 262 with the screwdriver while viewing the grid-like combined image 262 which is displayed. The screws 258b, 258d are now adjusted in their axial positions to raise the height or vertical position in the groove 250 of the peripheral edge of the half-silvered mirror 38 near the screws 258b, 258d, as shown in FIG. 9B.

By thus finely adjusting the heights or vertical positions in the groove 250 of the peripheral edges of the half-silvered mirror 38, the displayed grid-like combined image 262 will become free of blurs, and the observer 20 can view a sharp grid-like combined image 264 which is displayed, as shown in FIG. 11D.

The structural details of the radiographic image capturing system 10 incorporating the three-dimensional image display apparatus 22 according to the present embodiment and the mammographic apparatus 18 have been described above.

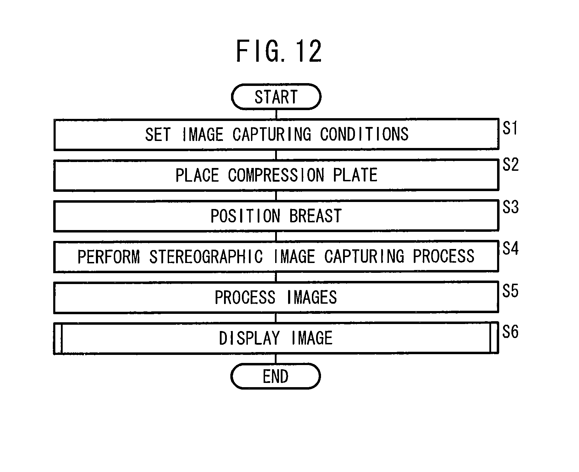

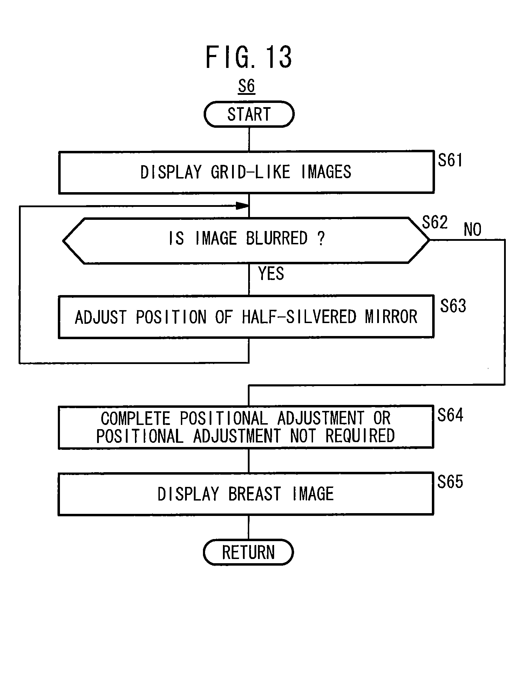

Now, an operation sequence of the radiographic image capturing system 10, or more specifically, a method of adjusting a combined image that is displayed by the three-dimensional image display apparatus 22, will be described below with reference to flowcharts shown in FIGS. 12 and 13.

It is assumed that after the half-silvered mirror 38 is positionally adjusted using the grid-like right-eye image 260r and the grid-like left-eye image 2601, the three-dimensional image display apparatus 22 displays a three-dimensional image of the breast 14.

In step S1 shown in FIG. 12, the doctor or the radiological technician, i.e., the observer 20, operates the display operation panel 64 of the mammographic apparatus 18 to store image capturing conditions depending on the breast 14 of the subject 12 (see FIGS. 1 and 10) in the image capturing condition memory 150 prior to a stereographic image capturing process to be performed on the breast 14.

In step S2, the doctor or the radiological technician places the compression plate 32 between the radiation source 26 and the image capturing base 30.

In step S3, the doctor or the radiological technician positions the breast 14 of the subject 12. Specifically, the doctor or the radiological technician places the breast 14 on the image capturing base 30 at a position confronting the compression plate 32, and then operates the display operation panel 64 to energize the compression plate controller 158 to move the compression plate 32 toward the image capturing base 30 in the downward direction indicated by the arrow Z (see FIG. 10). The breast 14 is now compressed and secured in place by the image capturing base 30 and the compression plate 32.

After the preparatory process in steps S1 through S3 has been completed, the mammographic apparatus 18 energizes the radiation source 26 to perform a stereographic image capturing process on the breast 14 in step S4.

Specifically, when the doctor or the radiological technician operates the display operation panel 64 to instruct the mammographic apparatus 18 to start a stereographic image capturing process, the radiation source controller 152 places the radiation source 26 in the position B. Then, the doctor or the radiological technician turns on an exposure switch, not shown, displayed on the display operation panel 64, causing the radiation source controller 152 to control the radiation source 26 in the position B according to the image capturing conditions stored in the image capturing condition memory 150.

The radiation source 26 in the position B emits the radiation 16b, which is applied through the compression plate 32 to the breast 14. The radiation 16b is transmitted through the breast 14, and is detected by the solid-state detector 28 as representing a first radiographic image (right-eye image 42r). The detector controller 154 controls the solid-state detector 28 to acquire the first radiographic image (right-eye image 42r) and stores the acquired right-eye image 42r in the image information memory 156.

Upon completion of the capture of the right-eye image 42r at the position B, the mammographic apparatus 18 moves the radiation source 26 to the position C and captures a second radiographic image at the position C in the same manner as it captured the first radiographic image at the position B.

Specifically, when the completion of the capture of the right-eye image 42r is displayed on the display operation panel 64, the doctor or the radiological technician operates the display operation panel 64 to instruct the mammographic apparatus 18 to start capturing a second radiographic image.

The radiation source controller 152 moves the radiation source 26 from the position B to the position C and places the radiation source 26 in the position C. Then, the doctor or the radiological technician turns on the exposure switch of the display operation panel 64, causing the radiation source controller 152 to control the radiation source 26 in the position C according to the image capturing conditions stored in the image capturing condition memory 150.

The radiation source 26 in the position C emits the radiation 16c, which is applied through the compression plate 32 to the breast 14. The radiation 16c is transmitted through the breast 14, and is detected by the solid-state detector 28 as representing a second radiographic image (left-eye image 421). The detector controller 154 controls the solid-state detector 28 to acquire the second radiographic image (left-eye image 421) and stores the acquired left-eye image 421 in the image information memory 156.

When the stereographic image capturing process in step S4 is completed, the image information memory 156 stores therein two radiographic images, i.e., the right-eye image 42r and the left-eye image 421 each comprising a two-dimensional image.

Thereafter, in step S5, the controller 160 of the three-dimensional image display apparatus 22 (see FIGS. 1 through 3, 10) acquires the right-eye image 42r and the left-eye image 421 from the image information memory 156 automatically or based on an image acquiring instruction input from the observer 20 through the operating unit 116. The controller 160 then outputs the right-eye image 42r and the left-eye image 421 which have been acquired to the image processor 162. The image processor 162 performs a predetermined image processing process on the right-eye image 42r and the left-eye image 421. The controller 160 then stores the right-eye image 42r and the left-eye image 421 which have been processed in the image information memory 164.

In step S6, the three-dimensional image display apparatus 22 displays a three-dimensional image of the breast 14.

The observer 20 has been working on the mammographic apparatus 18 for performing the stereographic image capturing process in steps S1 through S4. Therefore, when the three-dimensional image display apparatus 22 displays a three-dimensional image of the breast 14, the observer 20 may possibly view the displayed three-dimensional image of the breast 14 as blurred due to a change in the posture of the observer 20 which may have been caused in steps S1 through S4.

In order to see a sharp displayed three-dimensional image of the breast 14, the observer 20 operates the operating unit 116 to instruct the controller 160 to display the grid-like right-eye image 260r and the grid-like left-eye image 2601 in step S61 (see FIG. 13) of a subroutine in step S6.

In response to the instruction from the observer 20, the controller 160 displays the grid-like left-eye image 2601 stored in the image information memory 164 on the display screen 122 of the left-eye image display unit 34 and also displays the grid-like right-eye image 260r stored in the image information memory 164 on the display screen 124 of the right-eye image display unit 36. Display light 2661 from the grid-like left-eye image 2601 displayed on the display screen 122 of the left-eye image display unit 34 travels obliquely upwardly toward the half-silvered mirror 38, and display light 266r from the grid-like right-eye image 260r displayed on the display screen 124 of the right-eye image display unit 36 travels obliquely downwardly toward the half-silvered mirror 38.

The half-silvered mirror 38 transmits the display light 2661 therethrough and reflects the display light 266r therefrom, generating a grid-like combined image 262 which is a combination of the right-eye image 260r represented by the display light 266r and the left-eye image 2601 represented by the display light 2661.

In step S62, if the observer 20 views the grid-like combined image 262 as blurred in its lower portion as shown in FIG. 11C (YES: step S62), then the observer 20 judges that the half-silvered mirror 38 has not been adjusted to an appropriate position. While viewing the grid-like combined image 262, the observer 20 uses the screwdriver to turn the screws 258b, 258d corresponding in position to the lower portion of the grid-like combined image 262 to adjust the axial positions of the screws 258b, 258d, raising the height or vertical position in the groove 250 of the peripheral edge of the half-silvered mirror 38 near the screws 258b, 258d, in step S63.

If the observer 20 views the grid-like combined image 264 as sharp shown in FIG. 11D (NO: step S62), then the observer 20 judges that the half-silvered mirror 38 has been adjusted to an appropriate position, and completes the position adjusting process in step S64.

In step S65, the observer 20 operates the operating unit 116 to instruct the controller 160 to display a three-dimensional image of the breast 14.

Specifically, the controller 160 displays the processed left-eye image 421 stored in the image information memory 164 on the display screen 122 of the left-eye image display unit 34 and also displays the processed right-eye image 42r stored in the image information memory 164 on the display screen 124 of the right-eye image display unit 36. Display light 441 from the left-eye image 421 displayed on the display screen 122 travels obliquely upwardly toward the half-silvered mirror 38, and display light 44r from the right-eye image 42r displayed on the display screen 124 travels obliquely downwardly toward the half-silvered mirror 38.

The half-silvered mirror 38 transmits the display light 441 from the left-eye image 421 therethrough to the stereoscope 40 worn by the observer 20, and reflects the display light 44r from the right-eye image 42r therefrom to the stereoscope 40 worn by the observer 20. The polarizer lens 120r of the stereoscope 40 transmits therethrough only the display light 44r which is parallel to the absorption axis of the polarizer lens 120r, and the polarizer lens 1201 of the stereoscope 40 transmits therethrough only the display light 441 which is parallel to the absorption axis of the polarizer lens 1201. The observer 20 who is wearing the stereoscope 40 sees the right-eye image 42r represented by the display light 44r with the right eye 46r, and sees the left-eye image 421 represented by the display light 441 with the left eye 461, thereby visually recognizing the three-dimensional image of the breast 14 easily.

Since the three-dimensional image displayed in step S65 is an image displayed after the position adjusting process of the half-silvered mirror 38 in steps S62, 63 has been completed, the observer 20 can view the displayed three-dimensional image as a sharp image.

If the posture of the observer 20 is appropriate with respect to the three-dimensional image display apparatus 22, i.e., if the half-silvered mirror 38 is in an appropriate position, (NO: step S62) and the position adjusting process for the half-silvered mirror 38 is not required (step S64), then step S65 is immediately carried out after step S64.

With the three-dimensional image display apparatus 22 and the method of adjusting the combined image that is displayed according to the present embodiment, as described above, when the observer 20 directly views the grid-like combined image 262, the observer 20 can use the position adjusting mechanism 107 to adjust the position of the half-silvered mirror 38 with respect to the observer 20 for adjusting a blur in the grid-like combined image 262 due to a positional deviation between the right-eye image 260r and the left-eye image 2601 when the combined image 262 is generated. Each time the posture of the observer 20 who views a three-dimensional image is changed, the observer 20 may use the position adjusting mechanism 107 to adjust the position of the half-silvered mirror 38 until the blur in the grid-like combined image 262 is minimized. Accordingly, the position of the half-silvered mirror 38 can be adjusted appropriately.

Since the right-eye image 260r and the left-eye image 2601 are essentially identical grid-like images, if there is no positional deviation between the right-eye image 260r and the left-eye image 2601, then the grid-like combined image 264 which is generated by combining the right-eye image 260r and the left-eye image 2601 is a sharp image free of blurs. By directly viewing the combined image 264, therefore, the observer 20 can easily judge that it is not necessary to adjust the position of the half-silvered mirror 38 using the position adjusting mechanism 107.

Conversely, if there is a positional deviation between the right-eye image 260r and the left-eye image 2601, then the grid-like combined image 262 which is generated by combining the right-eye image 260r and the left-eye image 2601 is a blurred image. By directly viewing the combined image 262, therefore, the observer 20 can easily judge that the combined image 262 is blurred due to the positional deviation between the right-eye image 260r and the left-eye image 2601. The observer 20 can also identify the location of the blur in the combined image 262, and decide that it is necessary to adjust the position of the half-silvered mirror 38 using the position adjusting mechanism 107.

According to the present embodiment, therefore, even when the observer 20 changes its posture, the observer 20 can adjust the half-silvered mirror 38 to its appropriate position and hence can view a sharp three-dimensional image of the breast 14.

The width of the groove 250 in the frame 114 which is greater than the thickness of the half-silvered mirror 38 represents a position adjusting range in which the position of the half-silvered mirror 38 is adjustable. The position of the half-silvered mirror 38 can be finely adjusted in the position adjusting range along the thickness of the half-silvered mirror 38 by using the screws 258a through 258d.

The frame 114 has the threaded holes 256a through 256d defined in the lower wall thereof at the respective positions aligned with the four corners of the half-silvered mirror 38, and the screws 258a through 258d are threaded respectively in the threaded holes 256a through 256d and held against the half-silvered mirror 38. The position of the half-silvered mirror 38 along the thickness thereof can be adjusted wholly or locally by turning all or selected ones of the screws 258a through 258d. Since only the screws 258a through 258d need to be turned, it is easy to finely adjust the position of the half-silvered mirror 38 along the thickness thereof.

If the grid-like combined image 262 is blurred in a portion thereof, e.g., in its lower portion, then those of the screws 258a through 258d which are close to the portion of the half-silvered mirror 38 that corresponds to the blurred portion of the grid-like combined image 262 are turned to locally adjust the position of the half-silvered mirror 38. The position of the half-silvered mirror 38 can thus be adjusted precisely and accurately.

In the illustrated embodiment, the observer 20 manually turns the screws 258a through 258d to adjust the position of the half-silvered mirror 38 while viewing the grid-like combined image that is displayed. However, the grid-like combined image may be captured by a CCD camera, not shown, and the screws 258a through 258d may be automatically adjusted in their positions until the captured grid-like combined image becomes sharp.

## Claims

1. A three-dimensional image display apparatus (22) comprising:
a right-eye image display unit (36) for displaying a right-eye image (260r), which is two-dimensional, to be seen by a right eye (46r) of an observer (20);
a left-eye image display unit (34) for displaying a left-eye image (2601), which is two-dimensional, to be seen by a left eye (461) of the observer (20);
an image combiner (38) for combining the grid-like right-eye image (260r) and the grid-like left-eye image (2601), which are substantially identical to each other, into a grid-like combined image (262, 264); and
a position adjusting mechanism (107) for adjusting a position of the image combiner (38) with respect to the observer (20) to adjust a blur in the grid-like combined image (262, 264) due to a positional deviation between the grid-like right-eye image (260r) and the grid-like left-eye image (2601).

2. The three-dimensional image display apparatus (22) according to claim 1, wherein one image display unit (34) of the right-eye image display unit (36) and the left-eye image display unit (34) is disposed in confronting relation to the observer (20), and the other image display unit (36) of the right-eye image display unit (36) and the left-eye image display unit (34) is disposed above the one image display unit (34) and is angularly spaced therefrom;
the image combiner (38) comprises a half-silvered mirror disposed between the one image display unit (34) and the other image display unit (36); and
the half-silvered mirror (38) transmits the image (2601) which is displayed by the one image display unit (34) therethrough toward the observer (20) and reflects the image (260r) which is displayed by the other image display unit (36) therefrom toward the observer (20), thereby outputting the images (260r, 2601) as the combined image (262, 264) to the observer (20).

3. The three-dimensional image display apparatus (22) according to claim 2, further comprising a support member (106) extending from the one image display unit (34) and supporting the other image display unit (36),
wherein the position adjusting mechanism (107) comprises:
a shaft (108) extending substantially horizontally through the support member (106);
an angularly movable member (112) angularly movably supported on opposite ends of the shaft (108) for angular movement about the shaft (108) between the one image display unit (34) and the other image display unit (36); and
a frame (114) connected to the angularly movable member (112) and supporting peripheral edges of the half-silvered mirror (38) which is substantially rectangular in shape;
wherein the frame (114) has a groove (250) defined therein which receives the peripheral edges of the half-silvered mirror (38) therein;
the groove (250) has a width along thickness of the half-silvered mirror (38), the width being greater than the thickness of the half-silvered mirror (38); and
the frame (114) includes position adjusting members (258a through 258d) for positionally adjusting the peripheral edges of the half-silvered mirror (38) within the groove (250) along the thickness of the half-silvered mirror (38).

4. The three-dimensional image display apparatus (22) according to claim 3, wherein the position adjusting members (258a through 258d) are disposed on the frame (114) at respective four corners of the half-silvered mirror (38).

5. The three-dimensional image display apparatus (22) according to claim 3 or 4, wherein the frame (114) has threaded holes (256a through 256d) defined therein which are open to the groove (250) in a direction along the thickness of the half-silvered mirror (38); and
the position adjusting members (258a through 258d) comprise screws, respectively, threaded in the threaded holes (256a through 256d), respectively, and having respective tip ends held in contact with the peripheral edges of the half-silvered mirror (38).

6. The three-dimensional image display apparatus (22) according to claim 4 or 5, wherein if the grid-like combined image (262, 264) is blurred in a portion thereof, then those of the position adjusting members (258a through 258d) which are close to a portion of the half-silvered mirror (38) that corresponds to the blurred portion of the grid-like combined image (262, 264) are used to positionally adjust the half-silvered mirror (38).

7. A method of adjusting an image that is displayed, comprising the steps of:
displaying on a right-eye image display unit (36) a right-eye image (260r), which is two-dimensional, to be seen by a right eye (46r) of an observer (20);
displaying on a left-eye image display unit (34) a left-eye image (2601), which is two-dimensional, to be seen by a left eye (461) of the observer (20);
combining the grid-like right-eye image (260r) and the grid-like left-eye image (2601), which are substantially identical to each other, into a grid-like combined image (262, 264) with an image combiner (38); and
adjusting a position of the image combiner (38) with respect to the observer (20) to adjust a blur in the grid-like combined image (262, 264) due to a positional deviation between the grid-like right-eye image (260r) and the grid-like left-eye image (2601).
